# EUROPÄISCHE PATENTSCHRIFT

(11) **EP 1 180 449 B1**
(45) Veröffentlichungstag und Bekanntmachung des Hinweises auf die Patenterteilung: **21.09.2005**
(21) Anmeldenummer: 01116169.2
(22) Anmeldetag: 04.07.2001
(51) Int. Cl.: B60N 2/54

(54) **Gefederter Fahrzeugsitz**
Spring mounted vehicle seat
Siège de véhicule monté sur ressorts

(30) Priorität: 18.08.2000 DE 10040535
(43) Veröffentlichungstag der Anmeldung: 20.02.2002
(73) Patentinhaber: GRAMMER AG, 92224 Amberg (DE)
(72) Erfinder: Kohl, Josef, 92242 Hirschau (DE); Meiller, Hermann, 92533 Wernberg-Köblitz (DE)
(74) Vertreter: LOUIS, PÖHLAU, LOHRENTZ

(56) Entgegenhaltungen:
- EP-A- 0 448 340
- DE-A- 3 042 604
- US-A- 5 251 864
- US-A- 5 871 198
- US-A- 5 927 679

## Beschreibung

Die Erfindung betrifft einen gefederten Fahrzeugsitz, mit einem Grundflächenelement, einem Deckflächenelement und einem Federelement, wobei zwischen dem Grundflächenelement und dem Deckflächenelement ein Scherengestell mit ersten und zweiten seitlichen Scherenhebeln vorgesehen ist, die jeweils mit ihrem einen Ende fixiert und mit ihrem davon entfernten zweiten Ende beweglich vorgesehen und miteinander mittels einer Scherengestellachse schwenkbeweglich verbunden ist, und wobei an den ersten Scherenhebeln eine in Sitzlängsrichtung orientierte Kulisse befestigt ist, an der das zur Gewichtseinstellung des Fahrzeugsitzes in Sitzlängsrichtung verstellbare Federelement anliegt.

Ein solcher Fahrzeugsitz ist beispielsweise aus der DE 30 42 604 C2 bekannt. Konstruktionsbedingt kann dieser bekannte Fahrzeugsitz eine bestimmte Mindesthöhenabmessung, d.h. Höheneinstellung des Deckflächenelementes in Bezug auf das Grundflächenelement, nicht unterschreiten.

Ein Fahrzeugsitz der eingangs genannten Art ist beispielsweise auch aus der US 5 871 198 bekannt. Dieser bekannte Fahrzeugsitz weist eine Vielzahl Einzelteile auf, deren Zusammenbau einen nicht zu vernachlässigenden Aufwand darstellt.

Der Erfindung liegt die Aufgabe zugrunde, einen Fahrzeugsitz der eingangs genannten Art zu schaffen, der einfach ausgebildet und somit einfach herstellbar ist, und bei dem der Abstand zwischen dem Grund- und dem Deckenflächenelement im maximal belasteten Zustand extrem klein sein kann.

Diese Aufgabe wird bei einem Fahrzeugsitz der eingangs genannten Art erfindungsgemäss dadurch gelöst, dass die Kulisse als Plattenelement ausgebildet ist, das zum Deckflächenelement im unbelasteten Zustand des Fahrzeugsitzes mindestens annähernd parallel orientiert ist, dass auf dem Plattenelement ein zum Festlegen des unterseitigen Endabschnittes des Federelementes vorgesehenes erstes Schlittenelement in Sitzlängsrichtung verschiebebeweglich angeordnet ist, und dass an der Unterseite des Deckflächenelementes ein zum Festlegen des oberseitigen Endabschnittes des Federelementes vorgesehenes zweites Schlittenelement in Sitzlängsrichtung verschiebebeweglich angeordnet ist, wobei das erste und das zweite Schlittenelement mittels des Federelementes miteinander verbunden und somit zur Gewichtseinstellung des Fahrzeugsitzes simultan in Sitzlängsrichtung verstellbar sind.

Durch die Ausbildung der Kulisse als Plattenelement, bei dem es sich beispielsweise um eine Metallblechteil handelt, das mit den beiden seitlichen ersten Scherenhebeln durch Schweissen verbunden ist, ist im Vergleich mit einer als senkrecht orientierte Kulisse gemäss der genannten DE 30 42 604 C2 oder im Vergleich mit ebenfalls senkrecht bzw. schräg nach oben und nach unten orientierten Keilflächen gemäss der ebenfalls genannten US 5 871 198 eine kleine Bauhöhe realisierbar. Ausserdem ist ein Plattenelement zur Realisierung der Kulisse vergleichsweise einfach und preisgünstig herstellbar. Gleiches gilt für das erste und das zweite Schlittenelement, zwischen welchen das Federelement vorgesehen ist. Das Federelement kann zwischen den beiden Schlittenelementen lose angeordnet sein. Die simultane Verstellung des ersten und des zweiten Schlittenelementes mit dem dazwischen vorgesehenen Federelement zur Gewichtseinstellung des Fahrzeugsitzes kann z.B. mit Hilfe eines Spindeltriebes oder mit Hilfe einer Verstellvorrichtung erfolgen, wie sie in der deutschen Patentanmeldung 100 39 501.5-26 beschrieben ist.

Die mit dem erfindungsgemässen Fahrzeugsitz erzielten Vorteile bestehen darin, dass seine Gesamtbauhöhe in der tiefsten Stellung vergleichsweise klein sein kann. Eine weitere Reduktion der Gesamtbauhöhe ist dadurch erreichbar, dass die Komponenten seines Unterbaus in das Sitzpolster des Fahrzeugsitzes integriert sind.

Bei dem erfindungsgemässen Fahrzeugsitz kann das Federelement von einer sich vom unterseitigen Endabschnitt zum oberseitigen Endabschnitt erweiternden Schraubkegelfeder gebildet sein, wobei das erste Schlittenelement einen an den ersten Endabschnitt der Schraubkegelfeder angepassten Halteansatz und das zweite Schlittenelement einen an den zweiten Endabschnitt der Schraubkegelfeder angepassten Kragen aufweist. Eine derartige Ausbildung weist den Vorteil auf, dass mittels des Federelementes - trotz der losen Kombination mit den beiden Schlittenelementen - eine zuverlässige Wirkverbindung zwischen dem ersten und dem zweiten Schlittenelement gewährleistet wird, und dass ausserdem eine optimale Verstellbeweglichkeit des Federelementes zwischen dem Kulissen-Plattenelement und dem Deckflächenelement des Fahrzeugsitzes gewährleistet wird. Ein weiterer Vorteil einer solchen Ausbildung der zuletzt genannten Art besteht darin, dass die Bauhöhe, d.h. der Abstand zwischen dem Grundflächenelement und dem Deckflächenelement des Fahrzeugsitzes, sehr klein sein kann, wenn sich das Federelement "auf Block" befindet, d.h. wenn die Windungen der Schraubkegelfeder aneinander anliegen.

Das Federelement des erfindungsgemässen Fahrzeugsitzes kann beispielsweise auch aus einem entsprechende Federeigenschaften besitzenden Block aus einem geeigneten Kunststoffmaterial bestehen.

Als zweckmässig hat es sich bei dem erfindungsgemässen Fahrzeugsitz erwiesen, wenn das Kulissen-Plattenelement sich mit einem Hauptanschnitt von der Scherengestellachse nach vorne in Richtung zum fixierten Ende der beiden seitlichen ersten Scherenhebel und mit einem Nebenabschnitt in die entgegengesetzte Richtung nach rückwärts erstreckt. Die Scherengestellachse befindet sich in einem zentralen Bereich des Fahrzeugsitzes, d.h. des auf dem Deckflächenelement des Fahrzeugsitzes befindlichen Sitzpolsters. Dieser Mittelbereich wird auch vom jeweiligen Sitzbenutzer entsprechend belastet. Ist das Federelement in Sitzlängsrichtung in die Nachbarschaft der Scherengestellachse verstellt, so bedeutet das eine Gewichtseinstellung für einen schwergewichtigen Sitzbenutzer. Ist das Federelement von der Scherengestellachse weg nach vorne verstellt, so bedeutet das eine Gewichtseinstellung für einen leichtgewichtigen Sitzbenutzer. Das erklärt sich durch das Drehmoment der Federkraft des Federelementes und dem zugehörigen Hebelarm zwischen dem Federelement und den fixierten Enden der beiden seitlichen ersten Scherenhebel, welches das Drehmoment kompensiert, das durch Gewicht des Sitzbenutzers und den Hebelarm dieses Gewichtes zum fixierten Ende der ersten Scherenhebel bestimmt ist.

Um den zusammengefederten Tiefstzustand minimaler Bauhöhe des Fahrzeugsitzes genau definiert festzulegen, kann bei einem Fahrzeugsitz der oben genannten Art der Hauptabschnitt und/oder der Nebenabschnitt des Kulissen-Plattenelementes mit einem im zusammengefederten Tiefstzustand des Fahrzeugsitzes am Grundflächenelement anliegenden Anschlag ausgebildet sein.

Nachdem bei einem Fahrzeugsitz der oben genannten Art das Federelement zwischen dem ersten und dem zweiten Schlittenelement derartig vorgesehen ist, dass das Federelement mit einer bestimmten kleinen mechanischen Vorspannung gegen das Kulissen-Plattenelement und das Deckflächenelement des Fahrzeugsitzes drückt, ist bei der Längsverstellung des Federelementes zur Gewichtseinstellung des Fahrzeugsitzes eine gewisse, an dieser Vorspannkraft proportionale Reibung nicht zu vermeiden. Um diese Reibung auszuschliessen, kann es bevorzugt sein, wenn zwischen dem unterseitigen und dem oberseitigen Endabschnitt des Federelementes ein flexibles, nicht dehnbares Element eingespannt und zwischen dem Grundflächenelement und dem Deckflächenelement eine Vorlastfederelement vorgesehen ist. Bei dem flexiblen, nicht dehnbaren Element zwischen dem unterseitigen und dem oberseitigen Endabschnitt des Federelementes bzw. zwischen den beiden Schlittenelementen kann es sich um ein nicht dehnbares Band oder Seil handeln, das zwischen dem unterseitigen und dem oberseitigen Endabschnitt des Federelementes bzw. zwischen den Schlittenelementen derartig angebracht wird, dass das Federelement zwischen dem Kulissen-Plattenelement und dem Deckflächenelement des Fahrzeugsitzes genau anliegt ohne jedoch gegen das Kulissen-Plattenelement und das Deckflächenelement zu drücken. Hierdurch wird eine entsprechende Reibung bei der Längsverstellung des Federelementes zwischen dem Kulissen-Plattenelement und dem Deckflächenelement des Fahrzeugsitzes vermieden. Ein weiterer Vorteil einer solchen Ausbildung besteht darin, dass die Montage des Federelementes erleichtert ist. Das Vorlastfederelement des Fahrzeugsitzes der zuletzt genannten Art zwischen dem Grundflächenelement und dem Deckflächenelement ergibt hierbei den Vorteil, dass es zumindest das Gewicht des Fahrzeugsitzes, d.h. aller Komponenten über dem Grundflächenelement, zu kompensieren in der Lage ist. Bevorzugt ist es jedoch, wenn ein Vorlastfederelement zur Anwendung gelangt, das ausserdem auch zur Kompensation des Gewichts des sogenannten "leichten Fahrers" geeignet ist. Dann kann das zwischen dem Kulissen-Plattenelement und dem Deckflächenelement des Fahrzeugsitzes vorgesehene und in Sitzlängsrichtung verstellbare Federelement in vorteilhafter Weise derartig dimensioniert werden, dass es nur die Gewichtsdifferenz zwischen dem sogenannten "leichten Fahrer" und dem sogenannten "schweren Fahrer" auszugleichen bzw. einzustellen in der Lage sein muss.

Weitere Einzelheiten, Merkmale und Vorteile ergeben sich aus der nachfolgenden Beschreibung zweier in der Zeichnung dargestellter Ausführungsbeispiele des erfindungsgemässen Fahrzeugsitzes in einer schematischen Seitenansicht.
Es zeigen -:
- Figur 1: eine erste Ausführungsform des Fahrzeugsitzes bzw. seines Unterbaus, wobei das Deckflächenelement vom Grundflächenelement relativ weit beabstandet ist,
- Figur 2: den Fahrzeugsitz gemäss Figur 1 in einer mittleren Schwenkstellung, wobei das Deckflächenelement vom Grundflächenelement einen mittleren Abstand einnimmt,
- Figur 3: den Fahrzeugsitz gemäss den Figuren 1 und 2 in seinem maximal zusammengefederten Tiefstzustand,
- Figur 4: schematisch eine zweite Ausführungsform des Fahrzeugsitzes in der auseinandergefederten Stellung, und
- Figur 5: den Fahrzeugsitz gemäss Figur 4 in seinem zusammengefederten Tiefstzustand.

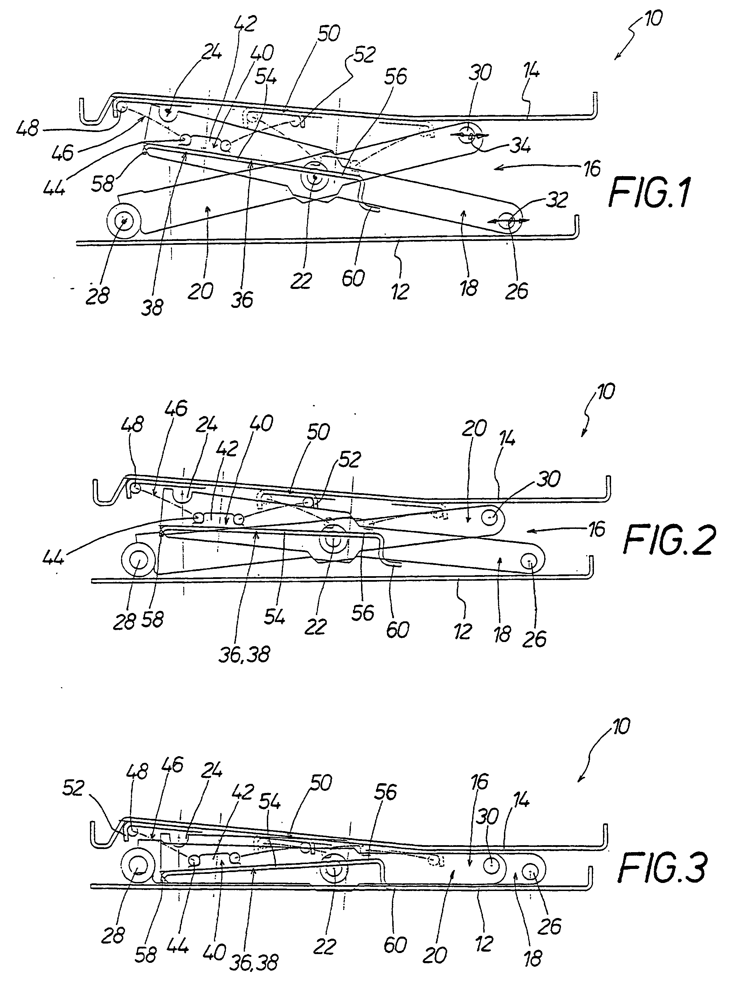

Die Figuren 1, 2 und 3 zeigen eine Ausbildung des Fahrzeugsitzes 10 bzw. seines Unterbaus mit einem Grundflächenelement 12 und mit einem Deckflächenelement 14. Das Grund- und Deckflächenelement 12 und 14 sind miteinander mittels eines Scherengestelles 16 verbunden. Das Scherengestell 16 weist zwei seitliche erste Scherenhebel 18 und zwei seitliche zweite Scherenhebel 20 auf. Die ersten und die zweiten Scherenhebel 18 und 20 sind miteinander mittels einer Scherengestellachse 22 schwenkbeweglich verbunden.

Jeder der beiden seitlichen ersten Scherenhebel 18 weist ein erstes Ende 24 und ein zweites Ende 26 auf. Jeder der beiden zweiten Scherenhebel 20 weist ein erstes Ende 28 und ein zweites Ende 30 auf. Das erste Ende 24 des jeweiligen ersten seitlichen Scherenhebels 18 ist am Deckflächenelement 14 ortsfest schwenkbeweglich angebracht. Das erste Ende 28 jedes der beiden seitlichen zweiten Scherenhebel 20 ist am Grundflächenelement 12 ortsfest schwenkbeweglich angebracht. Das zweite Ende 26 jedes der beiden ersten Scherenhebel 18 ist am Grundflächenelement 12 linear beweglich geführt vorgesehen. Diese linear geführte Beweglichkeit ist durch den Doppelpfeil 32 angedeutet. Das zweite Ende 30 des jeweiligen zweiten seitlichen Scherenhebels 20 ist am Deckflächenelement 14 linear beweglich geführt angeordnet. Diese linear geführte Beweglichkeit ist durch den Doppelpfeil 34 verdeutlicht.

An den ersten Scherenhebeln 18 ist eine Kulisse 36 befestigt, die von einem Plattenelement 38 gebildet ist. Das Plattenelement 38 ist zum Deckflächenelement 14 des Fahrzeugsitzes 10 im unbelasteten Zustand des Fahrzeugsitzes, wie er in Figur 1 dargestellt ist, mindestens annähernd parallel orientiert. Auf dem Kulissen-Plattenelement 38 ist ein erstes Schlittenelement 40 in Sitzlängsrichtung verschiebebeweglich angeordnet. Mit durchgezogenen Linien ist das erste Schlittenelement 40 in einer in Sitzlängsrichtung vorderen Position und mit strichlierten Linien in einer nach rückwärts verstellten Position dargestellt. Die Verstellung des ersten Schlittenelementes erfolgt mit Hilfe einer nicht gezeichneten Verstelleinrichtung.

Das erste Schlittenelement 40 ist mit einem Halteansatz 42 ausgebildet, der an den ersten Endabschnitt 44 eines Federelementes 46 abmessungsmässig angepasst ist, das durch strichpunktierte Linien angedeutet ist und das zwischen dem Kulissen-Plattenelement 38 und dem Deckflächenelement 14 des Fahrzeugsitzes 10 angeordnet bzw. eingespannt ist. Zum Festlegen des zweiten Endabschnittes 48 des Federelementes 46 am Deckflächenelement 14 dient ein zweites Schlittenelement 50, das mit dem ersten Schlittenelement 40 mittels des geringfügig mechanisch vorgespannten Federelementes 46 wirkverbunden ist.

Wie durch die strichpunktierte Linie des Federelementes 46 verdeutlicht ist, kann das Federelement 46 als Schraubkegelfeder ausgebildet sein, die vom unterseitigen ersten Endabschnitt 44 zum oberseitigen zweiten Endabschnitt 48 erweitert ausgebildet ist. Zur definierten Festlegung des zweiten Endabschnittes 48 des Federelementes 46 am zugehörigen zweiten Schlittenelement 50 ist das zweite Schlittenelement 50 mit einem nach unten stehenden Kragen 52 ausgebildet.

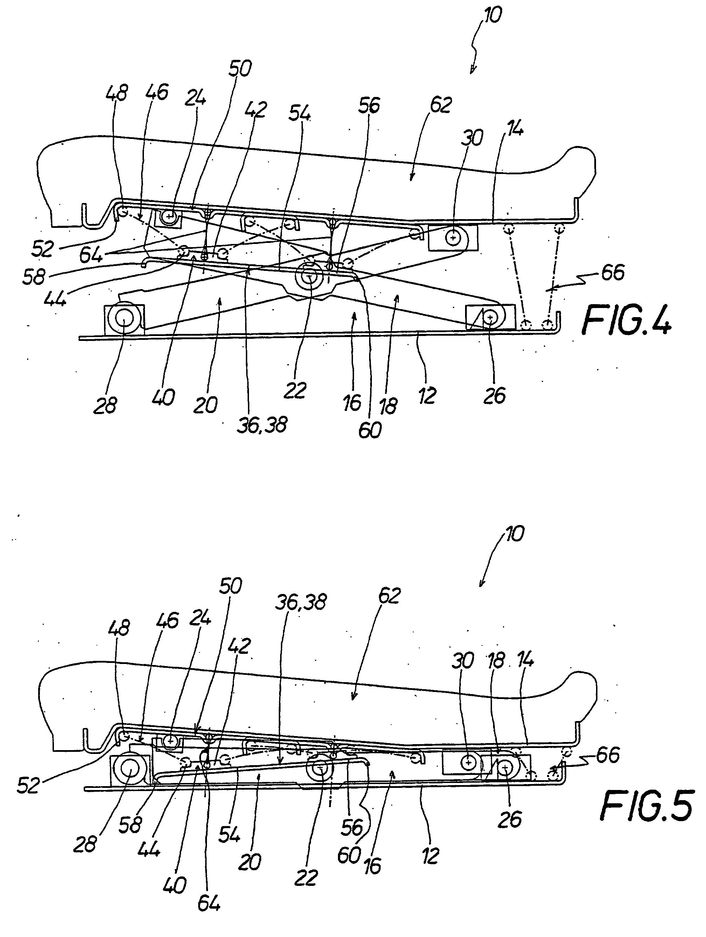

Das Kulissen-Plattenelement 38 erstreckt sich mit einem Hauptabschnitt 54 in Bezug auf die Scherengestellachse 22 in Sitzlängsrichtung nach vorne, d.h. in Richtung zum fixierten ersten Ende 24 der beiden seitlichen ersten Scherenhebel 18 und mit einem Nebenabschnitt 56 in die entgegengesetzte Richtung, d.h. in Sitzlängsrichtung nach rückwärts. Der Hauptabschnitt 54 des Kulissen-Plattenelementes 38 ist mit einem nach unten orientieren Anschlag 58 und der Nebenabschnitt 56 ist mit einem nach unten orientierten Anschlag 60 ausgebildet. Der Anschlag 58 bzw. der Anschlag 60 können im zusammengefederten Tiefstzustand des Fahrzeugsitzes, wie er in Figur 3 verdeutlicht ist, am Grundflächenelement 12 anliegen.

Gleiche Einzelheiten sind in den Figuren 1 bis 3 jeweils mit denselben Bezugsziffern bezeichnet, so dass es sich erübrigt, in Verbindung mit den Figuren 1 bis 3 alle Einzelheiten jeweils detailliert zu beschreiben.

Die Figuren 4 und 5 zeigen eine zweite Ausbildung des Fahrzeugsitzes 10 bzw. seines Unterbaus, wobei auf dem Grundflächenelement 12 ausserdem ein Sitzpolster 62 dargestellt ist. Auf die Darstellung einer Rückenlehne des Fahrzeugsitzes 10 wurde verzichtet.

Gleiche Einzelheiten sind auch in den Figuren 4 und 5 mit denselben Bezugsziffern wie in den Figuren1 bis 3 bezeichnet, so dass es sich erübrigt, alle diese Einzelheiten in Verbindung mit den Figuren 4 und 5 noch einmal detailliert zu beschreiben.
Ein wesentlicher Unterschied besteht jedoch darin, dass bei der Ausbildung des Fahrzeugsitzes 10 gemäss den Figuren 4 und 5 zwischen dem unterseitigen ersten Endabschnitt 44 und dem oberseitigen zweiten Endabschnitt 48 des Federelementes 46 bzw. zwischen dem ersten Schlittenelement 40 und dem zweiten Schlittenelement 50 ein flexibles, nicht dehnbares Element 64 derartig vorgesehen ist, dass das Federelement 46 nicht oder nur mit einer vernachlässigbar kleinen Kraftkomponente gegen das Kulissen-Plattenelement 38 und gegen das Deckflächenelement 14 des Fahrzeugsitzes 10 drückt, so dass die Reibungskraft bei der Verstellung des Federelementes 46 in Sitzlängsrichtung eliminiert oder zumindest vernachlässigbar klein ist.

In den Figuren 4 und 5 sind das Federelement 46, die Schlittenelemente 40 und 50 und das flexible, nicht dehnbare Element 64 in zwei voneinander verschiedenen Längs-Positionen dargestellt.

Zur Kompensation des Gewichtes des Oberbaus des Fahrzeugsitzes 10 und ggf. zur Kompensation des Gewichtes eines sogenannten "leichtgewichtigen Fahrers" ist zwischen dem Grundflächenelement 12 und dem Deckflächenelement 14 des Fahrzeugsitzes 10 ein Vorlastfederelement 66 angeordnet, das, wie das Federelement 46 zwischen dem Kulissen-Plattenelement 38 und dem Deckflächenelement 14, von einer Schraubkegelfeder oder von einem entsprechende Federeigenschaften besitzenden Kunststoffblock gebildet sein kann.

## Patentansprüche

1. Gefederter Fahrzeugsitz, mit einem Grundflächenelement (12), einem Deckflächenelement (14) und einem Federelement (46), wobei zwischen dem Grundflächenelement (12) und dem Deckflächenelement (14) ein Scherengestell (16) mit ersten und zweiten seitlichen Scherenhebeln (18 und 20) vorgesehen ist, die jeweils mit ihrem einen Ende (24, 28) fixiert und mit ihrem davon entfernten zweiten Ende (26, 30) beweglich vorgesehen und miteinander mittels einer Scherengestellachse (22) schwenkbeweglich verbunden sind, und wobei an den ersten Scherenhebeln (18) eine in Sitzlängsrichtung orientierte Kulisse (36) befestigt ist, an der das zur Gewichtseinstellung des Fahrzeugsitzes (10) in Sitzlängsrichtung verstellbare Federelement (46) anliegt,
**dadurch gekennzeichnet,**
**dass** die Kulisse (36) als Plattenelement (38) ausgebildet ist, das zum Deckflächenelement (14) im unbelasteten Zustand des Fahrzeugsitzes (10) mindestens annähernd parallel orientiert ist, dass auf dem Plattenelement (38) ein zum Festlegen des unterseitigen ersten Endabschnittes (44) des Federelementes (46) vorgesehenes erstes Schlittenelement (40) in Sitzlängsrichtung verschiebebeweglich angeordnet ist, und dass an der Unterseite des Deckflächenelementes (14) ein zum Festlegen des oberseitigen zweiten Endabschnittes (48) des Federelementes (46) vorgesehenes zweites Schlittenelement (50) in Sitzlängsrichtung verschiebebeweglich angeordnet ist, wobei das erste Schlittenelement (40) und das zweite Schlittenelement (50) mittels des Federelementes (46) miteinander verbunden und somit zur Gewichtseinstellung des Fahrzeugsitzes (10) simultan in Sitzlängsrichtung verstellbar sind.

2. Fahrzeugsitz nach Anspruch 1,
**dadurch gekennzeichnet,**
**dass** das Federelement (46) von einer sich vom unterseitigen ersten Endabschnitt (44) zum oberseitigen zweiten Endabschnitt (48) erweiternden Schraubkegelfeder gebildet ist, wobei das erste Schlittenelement (40) einen an den ersten Endabschnitt (44) der Schraubkegelfeder angepassten Halteansatz (42) und das zweite Schlittenelement (50) einen an den zweiten Endabschnitt (48) der Schraubkegelfeder angepassten Kragen (52) aufweist.

3. Fahrzeugsitz nach Anspruch 1,
**dadurch gekennzeichnet,**
**dass** das Kulissen-Plattenelement (38) sich mit einem Hauptabschnitt (54) in Bezug auf die Scherengestellachse (22) in Sitzlängsrichtung nach vorne in Richtung zum fixierten Ende (24) der beiden seitlichen ersten Scherenhebel (18) und mit einem Nebenabschnitt (56) in die entgegengesetzte Richtung nach rückwärts erstreckt.

4. Fahrzeugsitz nach Anspruch 3,
**dadurch gekennzeichnet,**
**dass** der Hauptabschnitt (54) und/oder der Nebenabschnitt (56) des Kulissen-Plattenelementes (38) mit einem im zusammengefederten Tiefstzustand des Fahrzeugsitzes (10) am Grundflächenelement (12) anliegenden Anschlag (58; 60) ausgebildet ist.

5. Fahrzeugsitz nach einem der Ansprüche 1 bis 4,
**dadurch gekennzeichnet,**
**dass** zwischen dem unterseitigen ersten Endabschnitt (44) und dem oberseitigen zweiten Endabschnitt (48) des Federelementes (46) ein flexibles, nicht dehnbares Element (64) eingespannt ist.

6. Fahrzeugsitz nach einem der Ansprüche 1 bis 5,
**dadurch gekennzeichnet,**
**dass** zwischen dem Grundflächenelement (12) und dem Deckflächenelement (14) ein Vorlastfederelement (66) vorgesehen ist.

## Claims

1. Spring mounted vehicle seat, having a base element (12), a cover element (14) and a spring element (46), a scissor frame (16) being provided between the base element (12) and the cover element (14), the scissor frame having first and second lateral scissor levers (18 and 20) which are provided in each case in a fixed manner at one end (24, 28) and in a movable manner at their second end (26, 30) remote therefrom and are connected pivotably to each other by means of a scissor-frame spindle (22), and a connecting link (36) being fastened to the first scissor levers (18), which connecting link is oriented in the longitudinal direction of the seat and against which the spring element (46), which can be adjusted in the longitudinal direction of the seat, bears in order to set the weight-bearing capacity of the vehicle seat (10), **characterized in that** the connecting link (36) is designed as a plate element (38) which is oriented at least approximately parallel to the cover element (14) in the unloaded state of the vehicle seat (10), **in that** a first slide element (40), which is provided for securing the lower, first end section (44) of the spring element (46), is arranged on the plate element (38) in a manner such that it can be displaced in the longitudinal direction of the seat, and **in that** a second slide element (50), which is provided for securing the upper, second end section (48) of the spring element (46), is arranged at the lower side of the cover element (14) in a manner such that it can be displaced in the longitudinal direction of the seat, the first slide element (40) and the second slide element (50) being connected to each other by means of the spring element (46) and therefore being adjustable simultaneously in the longitudinal direction of the seat in order to set the weight-bearing capacity of the vehicle seat (10).

2. Vehicle seat according to Claim 1, **characterized in that** the spring element (46) is formed by a conical coil spring expanding from the lower, first end section (44) to the upper, second end section (48), the first slide element (40) having a retaining lug (42) matched to the first end section (44) of the conical coil spring and the second slide element (50) having a collar (52) matched to the second end section (48) of the conical coil spring.

3. Vehicle seat according to Claim 1, **characterized in that** the connecting-link plate element (38) extends, with respect to the scissor-frame spindle (22), with a main section (54) forwards in the longitudinal direction of the seat towards the fixed end (24) of the two lateral, first scissor levers (18) and with a secondary section (56) rearwards in the opposite direction.

4. Vehicle seat according to Claim 3, **characterized in that** the main section (54) and/or the secondary section (56) of the connecting-link plate element (38) is/are designed with a stop (58; 60) which bears against the base element (12) in the compressed lowest state of the vehicle seat (10).

5. Vehicle seat according to one of Claims 1 to 4, **characterized in that** a flexible, non-extensible element (64) is clamped between the lower, first end section (44) and the upper, second end section (48) of the spring element (46).

6. Vehicle seat according to one of Claims 1 to 5, **characterized in that** a preloading spring element (66) is provided between the base element (12) and the cover element (14).

## Revendications

1. Siège de véhicule monté sur ressorts, comprenant un élément de surface de base (12), un élément de surface de couverture (14) et un élément de ressort (46), dans lequel un châssis croisé (16) avec des premiers et deuxièmes leviers croisés latéraux (18 et 20) est prévu entre l'élément de surface de base (12) et l'élément de surface de couverture (14), les leviers étant respectivement prévus en étant fixés par une de leurs extrémités (24, 28) et mobiles par leur deuxième extrémité (26, 30) éloignée de celle-ci et étant reliés de façon pivotante entre eux au moyen d'un axe de châssis croisé (22), et dans lequel une coulisse (36) orientée dans la direction longitudinale de siège est fixée aux premiers leviers croisés (18), l'élément de ressort (46), réglable dans la direction longitudinale de siège pour le réglage du poids du siège de véhicule (10), portant sur la coulisse,
**caractérisé en ce que**
la coulisse (36) est réalisée comme un élément de plateau (38) qui est orienté au moins approximativement en parallèle à l'élément de surface de couverture (14) à l'état déchargé du siège de véhicule (10), **en ce que** sur l'élément de plateau (38), un premier élément de chariot (40), prévu pour déterminer la première section d'extrémité (44) de face inférieure de l'élément de ressort, est disposé de façon mobile en translation dans la direction longitudinale de siège, et **en ce que** sur la face inférieure de l'élément de surface de couverture (14), un deuxième élément de chariot (50), prévu pour déterminer de la deuxième section d'extrémité (48) de face supérieure de l'élément de ressort (46), est disposé de façon mobile en translation dans la direction longitudinale de siège, dans lequel le premier élément de chariot (40) et le deuxième élément de chariot (50) sont reliés ensemble au moyen de l'élément de ressort (46) et sont donc réglables simultanément dans la direction longitudinale du siège pour le réglage du poids du siège de véhicule (10).

2. Siège de véhicule selon la revendication 1, **caractérisé en ce que** l'élément de ressort (46) est formé par un ressort hypoïde s'élargissant de la première section d'extrémité (44) de face inférieure à la deuxième section d'extrémité (48) de face supérieure, dans lequel le premier élément de chariot (40) présente une saillie de retenue (42) adapté à la première section d'extrémité (44) du ressort hypoïde et le deuxième élément de chariot (50) présente un rebord (52) adapté à la deuxième section d'extrémité (48) du ressort hypoïde.

3. Siège de véhicule selon la revendication 1, **caractérisé en ce que** l'élément de plateau à coulisse (38) s'étend avec une section principale (54) par rapport à l'axe de châssis croisé (22) dans la direction longitudinale du siège vers l'avant en direction de l'extrémité fixée (24) des deux premiers leviers croisés latéraux (18) et s'étend avec une section secondaire (56) dans la direction opposée en arrière.

4. Siège de véhicule selon la revendication 3, **caractérisé en ce que** la section principale (54) et/ou la section secondaire (56) de l'élément de plateau à coulisse (38) sont réalisées avec une butée (58 ; 60) portant sur l'élément de surface de base (12) dans un état inférieur comprimé du siège de véhicule (10).

5. Siège de véhicule selon l'une quelconque des revendications 1 à 4, **caractérisé en ce qu'**un élément souple, non extensible (64) est monté entre la première section d'extrémité (44) de face inférieure et la deuxième section d'extrémité (48) de face supérieure de l'élément de ressort (46).

6. Siège de véhicule selon l'une quelconque des revendications 1 à 5, **caractérisé en ce qu'**un élément de ressort précontraint (66) est prévu entre l'élément de surface de base (12) et l'élément de surface de couverture (14).
